# EUROPEAN PATENT SPECIFICATION

(11) **EP 2 132 813 B1**
(45) Date of publication and mention of the grant of the patent: **06.11.2019**
(21) Application number: 08716556.9
(22) Date of filing: 14.03.2008
(51) Int. Cl.: H01M 4/76, H01M 4/04, H01M 4/14

(54) **ELECTRODE FOR A BATTERY, A PLUG FOR AN ELECTRODE AND A BATTERY COMPRISING THE SAME**
ELEKTRODE FÜR EINE BATTERIE, STECKER FÜR EINE ELEKTRODE UND BATTERIE DAMIT
ELECTRODE POUR UNE BATTERIE, PRISE POUR UNE ÉLECTRODE ET BATTERIE COMPRENANT CELLES-CI

(30) Priority: 16.03.2007 GB 0705121
(43) Date of publication of application: 16.12.2009
(73) Proprietor: EH Europe GmbH, 8001 Zürich (CH)
(72) Inventor: BERTOZZO, Renato, I-36075 Montecchio, Maggiore (IT)
(74) Representative: Abel & Imray
(86) International application number: PCT/EP2008/002067
(87) International publication number: WO 2008/113525

(56) References cited:
- CH-A- 458 460
- CH-A- 458 460
- FR-A- 2 209 223
- US-A- 3 462 305
- US-A- 3 462 305
- US-A- 3 647 546
- US-A- 5 509 564

## Description

The present invention relates to an electrode for a battery (preferably, but not exclusively, a lead-acid battery) and to a plug forming part of the electrode. The present invention further relates to a battery comprising the positive electrode and/or the plug.

It is known for the positive electrodes of lead-acid batteries to comprise one or more (and typically many) tubular portions. Each tubular portion typically comprises a sleeve which retains active material such as lead oxide. A plug member is inserted into the end of the sleeve to inhibit egress of active material from the sleeve. Examples of sleeves and plugs are described in US3462305. A conductive spine (typically made of lead or a lead alloy) extends within the sleeve. An example of such a positive electrode plate (often known as a "tubular plate" because the plate comprises tubular electrode portions) is discussed in EP0481520 and US3462305.

In such tubular plates, the plug is typically held within the sleeve in one of two ways. The plug member may be melted onto the sleeve by ultrasound or hot plates. This requires the use of specialist welding tooling and equipment. Alternatively, an aperture is provided in the top of the plug member for the receipt of the end of the conductive spine. The conductive spine is inserted into the aperture which is sized so that there is an interference fit between the spine and the plug member, thus inhibiting removal of the plug from the spine. This is inconvenient because the spine in this case is by necessity long and uses more lead than may be desired.

In accordance with a first aspect of the present invention there is provided an electrode for a battery, the electrode comprising:
(a) an electrode portion comprising:
   (i) a sleeve and
   (ii) active material disposed within the region bounded by the sleeve,
(b) a plug comprising a plug member disposed within the region bounded by the sleeve, the plug member being provided with one or more projections which engage with the sleeve to inhibit removal of the plug from the sleeve, wherein the plug forms a seal with the sleeve so to inhibit egress of active material from the electrode portion,
wherein the plug comprises first and second plug members adjacent to one another, the first plug member comprising a deformable projection which is adjacent to a deformable projection provided on the second plug member, the adjacent deformable projections being deformable so that attempted withdrawal of the plug members from the respective sleeves causes deformation of the adjacent deformable projections so that the adjacent deformable projections interfere with one another.

The electrode may be a positive or negative electrode. The electrode is preferably a positive electrode.

The electrode is preferably an electrode for a secondary (i.e. rechargeable) battery. The electrode is preferably an electrode for a lead-acid battery.

The electrode portion may comprise a conductive spine disposed within the region bounded by the sleeve.

The plug member is typically located in one end of the sleeve (this end typically being referred to as the bottom or base end) .

The sleeve may have a generally cylindrical shape. The term "cylindrical" means that the sleeve has substantially the same cross-section along its entire length. The term "cylindrical" therefore includes, but is not limited to, a right circular cylindrical shape. The cross-sectional shape of the sleeve may be square, circular, oval, elliptical or rectangular.

The electrode preferably comprises a plurality of electrode portions, each electrode portion comprising:
(i) a sleeve and
(ii) active material disposed within the region bounded by the sleeve.

In this case, each electrode portion may further comprise a conductive spine disposed within the region bounded by the sleeve. The plug preferably comprises a plurality of plug members, each plug member being provided with one or more projections which engage with the sleeve to inhibit removal of the plug from the sleeve. The plug forms a seal with the sleeve so to inhibit egress of active material from each of the electrode portions. Each plug member may be disposed within the region bounded by a corresponding sleeve.

The plug preferably comprises a base for assisting in the handling of the plug. If the plug comprises a plurality of plug members, it is preferred that the base connects the plurality of plug members. Such a base may be in the form of a bar. The bar may be elongate. The elongate bar may be waisted. This means that the bar comprises one or more waisted portions. The width of a waisted portion of the bar is less than the width of the two portions either side of the waisted portion. Such waisting may assist in handling the electrode, particularly if the electrode is manufactured and/or handled using machines. The use of a bar (such as a waisted bar) may also assist in enabling secure packaging of multiple electrodes, for example, when such electrodes are packed into a casing. The bar may also assist in making it easier to position the electrode within a casing. The bar may be provided with one or more bar slots. It is preferred that the one or more bar slots are elongate. It is further preferred that the longitudinal axis of the one or more bar slots is parallel to the longitudinal axis of the (preferably elongate) bar. The bar slots are useful in reducing anomalous shrinkage of the plug, if the plug is made by the moulding of a plastics material which is typically heated (to allow flow) and then cooled. Anomalous shrinkage may cause unwanted distortions of the plug.

The bar may comprise one or more end portions which are not provided with a plug member. Such end portions may assist in handling the electrode.

The use of a base to connect a plurality of plugs not only assists in the handling of the plug members, but assists in inhibiting removal of the plug member from sleeves. Attempts to remove the plug members by pulling on the base may typically cause the projections of many plug members to engage with the respective sleeves, thus inhibiting removal of the plug members.

The plug is preferably provided with from 5 to 35 plug members, more preferably 10 to 30, further more preferably 14 to 25 plug members, and most preferably 14, 15, 18, 19, 24 or 25 plug members.

The conductive spine preferably comprises lead. The active material (at least in the battery as initially provided prior to charging) preferably comprises lead oxide (especially when the electrode is a positive electrode of a lead-acid battery). Those skilled in the art will recognize that the chemical composition of such an active material changes, depending on the charging status of the battery. For example, when the battery is fully charged, the positive electrode active material may comprise lead dioxide. After a full discharge, the positive electrode active material may comprise lead sulphate. In a partly charged or partly discharged battery the positive electrode active material may comprise both lead dioxide and lead sulphate.

The sleeve preferably comprises a porous material (such as woven or non-woven fabric). Such sleeves are known to those skilled in the art as "tubular gauntlets". The one or more projections on a plug member may extend through the pores in the porous material in order to inhibit movement of the plug member relative to the sleeve.

Each plug member may be provided with a plurality of projections (two projections being preferred). One or both of the outermost plug members (the end plug members) may typically be provided with one projection.

Each plug member may have a body portion. The body portion may comprise a cylindrical portion and a tapered head portion. The tapered head portion may be frusto-conical, for example. The cylindrical portion may form a lower portion of the plug member. The shape of the cylindrical portion may correspond to the shape of the sleeve. For example, the cylindrical portion preferably has a right circular cylindrical shape if the sleeve has a right circular cylindrical shape.

A body portion of one or more of the plug members may be provided with one or more body portion slots. The one or more body portion slots may be substantially parallel to the longitudinal axis of the plug member. The slots are useful in reducing anomalous shrinkage of the plug, if the plug is made by the moulding of a plastics material which is typically heated (to allow flow) and then cooled. Anomalous shrinkage may cause unwanted distortions of the plug.

The one or more projections may project from the body portion of the plug member.

The one or more projections may be shaped so as to permit insertion of the plug member into the sleeve, but resist removal of the plug member from the sleeve.

The one or more projections may be a barb. For example, each projection may present a gently sloping surface to the sleeve when the plug member is being inserted into the sleeve. When the plug member is being removed, the surface of the projection presented to the sleeve in the direction of removal of the plug member may be a steep surface of the projection. Herringbone or triangular shaped projections may provide such an effect.

One or more projections (and preferably the one or more projections) may be deformable.

It is preferred that a space is provided between the one or more projections and a body portion of the plug member. The space is preferable suitable for the receipt of a portion of the sleeve. The projection may extend through the sleeve, the sleeve therefore being received in the space between the projection and the body portion of the plug member.

One or more projections may have an arcuate shape. One or more projections may be waisted. A waisted projection may comprise a first region associated with the body portion of the plug member, a third region at the free end of the projection and a second region between the first and third regions. The width of the projection in the second region may be less than the width of the projection in the first and third regions.

One or more projections may be wedge-shaped. A wedge-shaped projection may comprise a first region associated with the body portion of the plug member and a second region at the free end of the projection. The width of the projection in the second region may be greater than the width of the projection in the first region.

The end of the one or more projections may be V shaped, inverted-V (bifurcated) shaped or square. Alternatively, two projections may form a bifurcation. For example, a plug member may be provided with two projections on one side of the plug member, the two projections forming a bifurcation. A plug member may be provided with two sets of projections, each set comprising two projections which form a bifurcation. The two sets may be on opposing sides of the plug member. There may be a space between the projections and a body portion of the plug member.

The electrode may comprise a plurality of projections, the shape of one of said plurality of projections being different from the shape of another of said plurality of projections. For example, one projection may be V-shaped and another may be waisted. The different shaped projections may be associated with the same plug member or may be associated with different plug members. Furthermore, the electrode may comprise a first set of plug members and a second set of plug members, the first set of plug members being provided with one or more (for example, two) projections of a first shape and the second set of plug members may be provided with one or more (for example, two) projections of a second shape, the second shape being different from the first shape. The first set of plug members may be generally grouped together. The second set of plug members may be generally grouped together.

The plug may be made from a plastics material, such as polypropylene or polyethylene. The plug may typically be made by moulding of a plastics material.

One or more (and preferably a plurality of) plug members may be integrally formed with the bar (if present). This may be readily done if the plug is made from a plastics material, for example, by a moulding process.

In accordance with a second aspect of the present invention there is therefore provided a battery electrode plug for sealing engagement with a cylindrical sleeve of an electrode portion of an electrode according to the first aspect of the present invention, the plug comprising a plug base for assisting in handling the plug, a plug member for insertion into the sleeve, the plug member being provided with one or more projections for engagement with the sleeve so as to inhibit removal of the plug from the sleeve, wherein the plug is capable of forming a seal with the sleeve, wherein the plug comprises first and second plug members adjacent to one another, the first plug member comprising a deformable projection which is adjacent to a deformable projection provided on the second plug member, the adjacent deformable projections being deformable so that, in use, attempted withdrawal of the plug members from the respective sleeves causes deformation of the adjacent deformable projections so that the adjacent deformable projections interfere with one another.

The electrode with which the plug is intended to be used is commonly known as a tubular electrode; those skilled in the art will realize that the term "tubular electrode" does not mean that the electrode itself has a tubular shape, rather that portions of the electrode are formed from sleeves which are of a generally cylindrical or tube-like shape. The tubular electrode is typically a positive electrode, and typically a positive electrode of a secondary battery, such as a lead-acid battery.

The battery electrode plug of the present invention inhibits egress of active material from the electrode portion.

The battery electrode plug of the second aspect of the present invention may comprise those features described above with reference to the electrode of the first aspect of the present invention. For example, the plug may be provided with a plurality of plug members. Each plug member may be provided with a plurality of projections.

In accordance with a third aspect of the present invention there is also provided a battery comprising an electrode in accordance with the first aspect of the present invention and/or a battery electrode plug of the second aspect of the present invention. It is preferred that the battery comprises a plurality of electrodes in accordance with the first aspect of the present invention and/or a plurality of battery electrode plugs of the second aspect of the present invention.

The present invention is now described by way of example only by reference to the following figures of which:
Figure 1 shows a perspective view of part of an illustrative plug;
Figure 2a shows a bottom view of the complete plug of which part is shown in Figure 1;
Figure 2b shows a cross-section through an illustrative electrode, the electrode comprising the plug of Figure 2a;
Figure 2c shows a top view of the plug of Figure 2a;
Figure 2d is a schematic cross-section of part of the electrode shown in Figure 2b;
Figure 3 shows a plug member of the plug of Figure 1 in more detail;
Figure 4 is a side-on view of a portion of a further embodiment of a plug in accordance with the present invention;
Figure 5 is a side-on view of two adjacent plug members of the plug of Figure 4;
Figure 6a is a perspective view of a portion of the plug of Figures 4 and 5;
Figure 6b is a perspective view of part of a further embodiment of plug in accordance with the present invention, wherein a plug member has a projection with a square end;
Figure 6c is a perspective view of part of a further embodiment of a plug in accordance with the present invention, wherein a plug member has a projection with a bifurcated end;
Figure 7 is a perspective view of part of an embodiment of a plug in accordance with the present invention, wherein a plug member has a set of two projections on one side of the plug member, the two projections forming a bifurcation;
Figure 8a is a plan view of part of plug which is an embodiment in accordance with the present invention, the plug members being provided with slots in the body portions;
Figure 8b is a side-on view of the end of the plug of Figure 8a;
Figure 8c is a cross-sectional view through the plug of Figures 8a and 8b;
Figure 9 is a perspective view (generally from above) of a further embodiment of a plug in accordance with the present invention, then plug comprising a waisted bar;
Figures 10a, 10b and 10c are a side-on view, a plan view and a cross-sectional view, respectively, of part of a further embodiment of a plug in accordance with the present invention, wherein a plug member comprises waisted projections;
Figures 11a, 11b and 11c are a plan view from below, a side-on view and a cross-sectional view, respectively, of a further embodiment of a plug in accordance with the present invention, the plug comprising a bar having end portions not provided with plug members and having a plug member with projections having a rounded, arcuate outline; and
Figure 12 is a perspective view of a part of a plug in accordance with the present invention, the plug being wedge shaped.

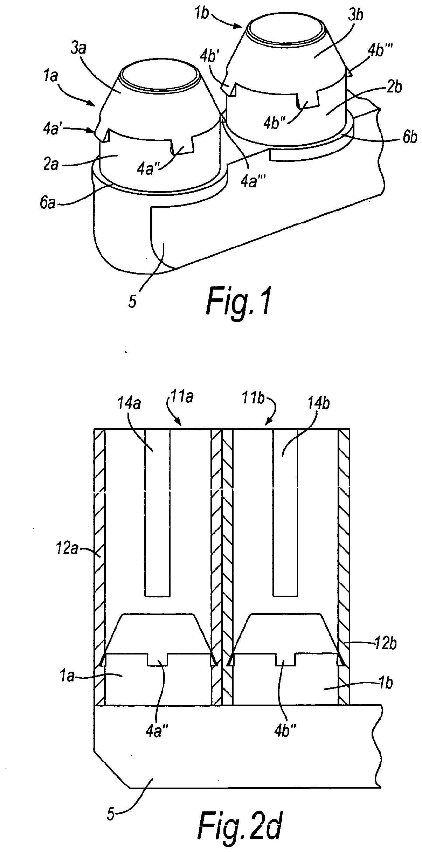

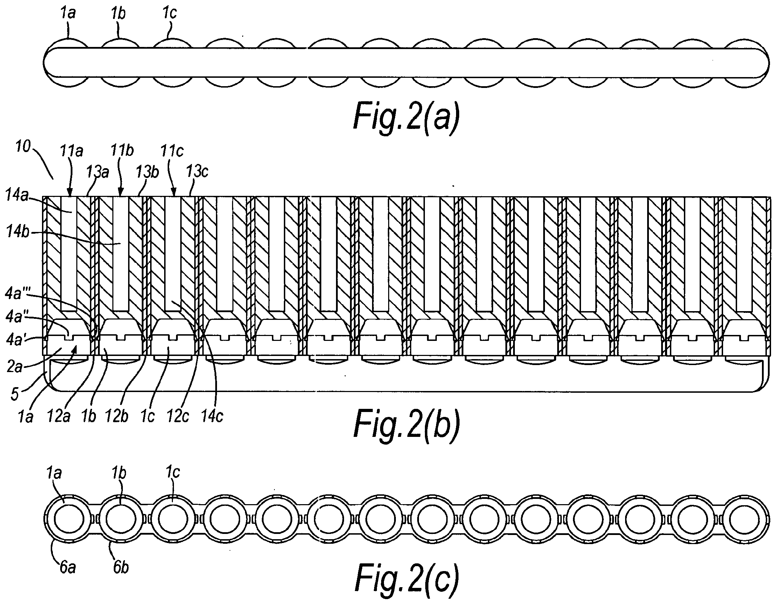

Referring to Figures 2a, 2b and 2c, an illustrative plug comprises a plurality of plug members (e.g. 1a, 1b, 1c) which have been integrally formed with a bar 5 from a plastics material (typically polypropylene or polyethylene), typically by a moulding process. The bar 5 provides a supporting base for the plug members and enables multiple plugs to be fitted easily to the other components of a positive electrode. Two plug members of the plug are shown in more detail in Figure 1 and are denoted by reference numerals 1a and 1b. Each plug member 1a, 1b comprises a generally right circular cylindrical lower portion 2a, 2b and a frusto-conical top 3a, 3b. Each plug member 1a, 1b is provided with four projections, only several of which are labelled (4a', 4a", 4a''', 4b', 4b", 4b'''). The projections engage a right circular tubular sleeve of an electrode to ensure attachment of the plug to the rest of the electrode and to resist removal of the plug. Surfaces (labelled 6a, 6b) of the bar 5 form seals with other components of a positive electrode as described hereafter.

Use of the plug in a positive electrode is now described with reference to Figures 1, 2a, 2b, 2c and 2d. Plug members 1a, 1b are incorporated into a positive electrode as shown in Figures 2b and 2d. The positive electrode (denoted generally by reference numeral 10) comprises a plurality of tubes (some of which are labelled 11a, 11b, 11c). Each tube comprises a tubular sleeve (12a, b, c) made of porous material (such as woven or nonwoven synthetic polyester fibre). The region bounded by each sleeve is filled with active material (13a, b, c), such as lead oxide (which, on charging, forms lead dioxide). A conductive spine (14a, b, c), typically made from lead or a lead alloy, extends into the region bounded by the sleeve and contacts the active material. Each spine is provided on a mounting bar (not shown) that allows common mounting of each spine. Each tube is further provided with a plug member (1a, 1b, 1c) that is inserted into the bottom end of the tubular sleeve. The outer surfaces of the body portions 2a, 2b of the plug members engage with the inner surfaces of the tubular sleeves. Sealing surfaces 6a, 6b abut against the ends of the tubular sleeves and assist in forming a seal to resist egress of active material from the tube. The projections 4a', 4a", 4a''', 4b', 4b", 4b''' provided on the plug members engage with the porous material of the sleeve to resist removal of the plug from sealing engagement with the sleeve.

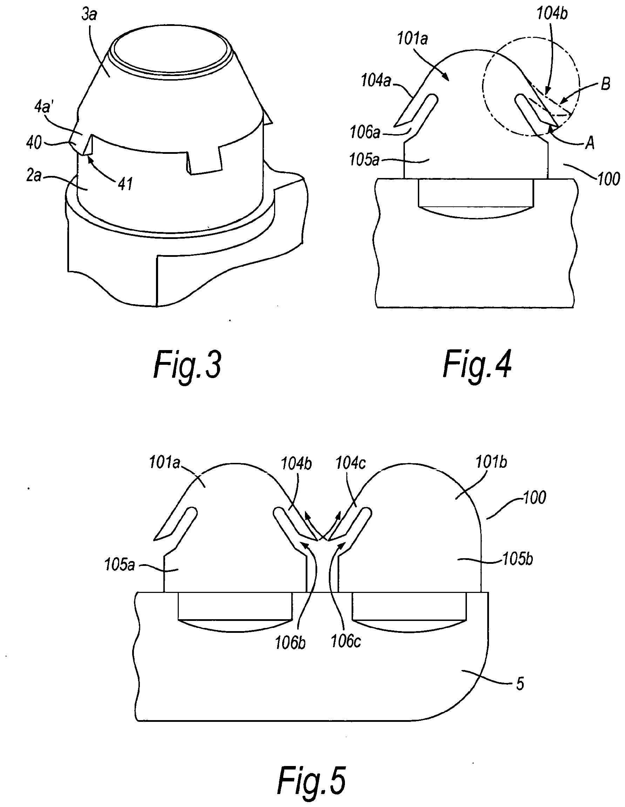

Figure 3 shows one of the projections (4a') in more detail. The projection 4a' acts as a barb. The shape and size of the projection 4a' permits the plug member to be inserted into the sleeve, but resists removal of the plug member from the sleeve once the plug member is fitted. The sleeve does not "catch" on the projection 4a' when the plug member is being inserted into the sleeve. The slope of surface 40 permits the plug member to be inserted into the sleeve of porous material. Once the plug member is in place, withdrawal of the plug member is inhibited. Projection 4a' extends through one or more pores of the sleeve. The orientation of the underside face 41 helps resist withdrawal of the plug member 1a from the sleeve.

Figures 4, 5 and 6a show an embodiment of a plug in accordance with the present invention. The plug as denoted generally by reference numeral 100 comprises a plurality of plug members, only two of which (labeled 101a, 101b) are shown in Figure 5. The plug members 101a, 101b are integrally formed with a bar 5. Plug member 101a comprises two projections 104a, 104b, whilst plug member 101b (being located at the end of the plug 100) comprises only one projection 104c. Each projection 104a, 104b, 104c is spaced from a respective body portion 105a, b, a space 106a, 106b, 106c being provided between the respective body portion 105a, b and the respective projection.

When the plug members 101a, 101b are inserted into respective sleeves, the ends of the projections protrude through holes in the porous sleeve or otherwise engage with the sleeve. A portion of the sleeve may be urged into the space 106a, b, c. Attempted removal of the plug member from the sleeve causes deformation of the projection as indicated in Figure 4, the projection being deformed from position A to position B. The effect of this deformation for two adjacent plug members is shown in Figure 5. Attempted withdrawal of the plug members from the sleeves causes projections 104b and 104c to move in the directions indicated by the arrows. This causes the projections to interfere with one another, further resisting withdrawal of the plug members from the sleeves. The plug members 101a, b are provided with projections with V-shaped ends. In use, sleeves abut against surfaces 107a,b therefore forming a seal inhibiting egress of active material from the electrode.

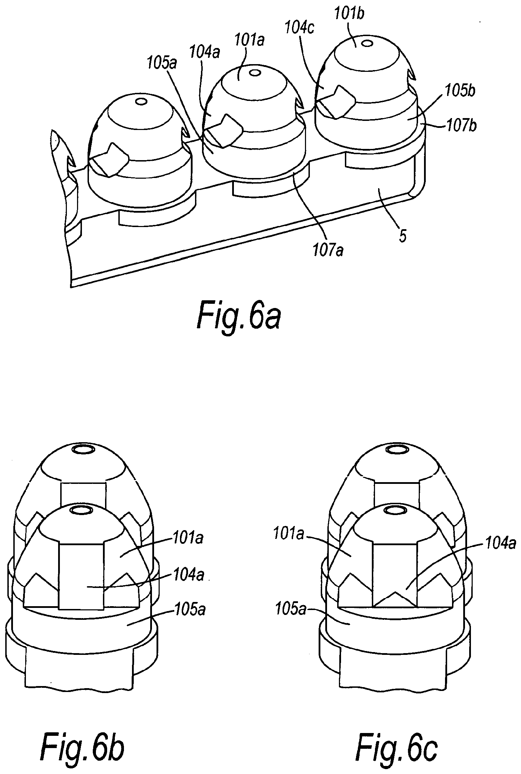

Figures 6b and 6c show alternative embodiments of plugmembers in accordance with the present invention. The reference numerals used in relation to Figures 6b and 6c are used to denote features that are described above with reference to Figures 4, 5 and 6a. Figure 6b shows a plug member with projections with square shaped ends. Figure 6c shows a plug member with projections with inverted-V shaped (i.e. bifurcated) ends. It has been found that the embodiments of Figures 6b and 6c are particularly effective at inhibiting the removal of plug members from sleeves in which they are mounted.

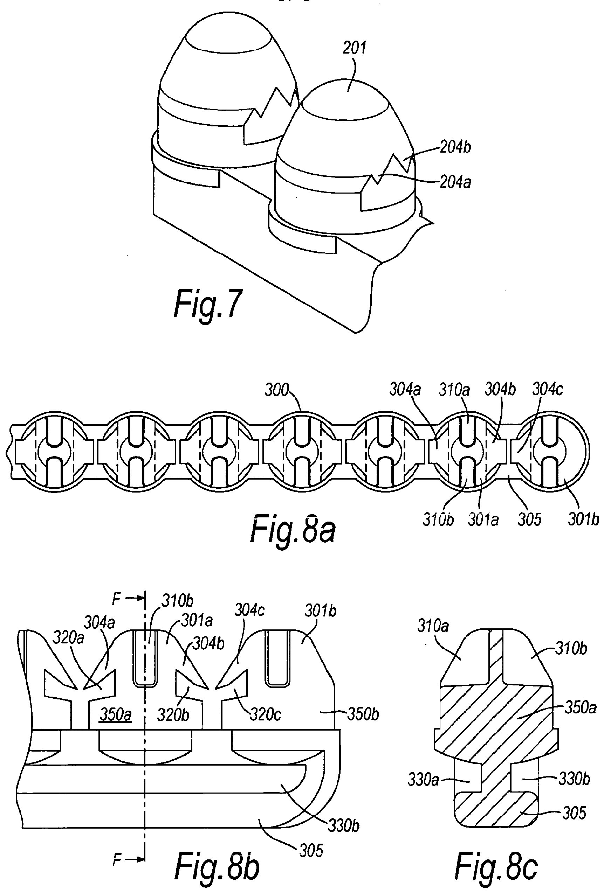

Figure 7 shows a plug member 201 with two projections 204a, 204b on one side of the plug member. The two projections (as opposed to merely the end of one projection) form a bifurcation.

Figures 8a, 8b and 8c show a further embodiment of a plug in accordance with the present invention. Figure 8a is a plan view of part of the plug. Figure 8b is a side-on view of the end of the plug and Figure 8c is a cross-sectional view through the plug along line FF (see Figure 8b). The plug is shown generally by reference numeral 300. Only two of the plug members (301a, 301b) are labeled for convenience and clarity. Spaces 320a, 320b, 320c are provided between respective projections 304a, 304b, 304c and their respective body portions 350a, 350b of the plug members. As can be seen from Figure 8a, the projections have square ends. Two body portion slots (only two of which (310a, 310b) are labeled) are provided in the body portion of each plug member. The plug is typically made by moulding of polypropylene; this requires the polypropylene to be heated, introduced to a mould and then cooled. These body portion slots 310a, 310b are provided to reduce the likelihood of the plug distorting during the cooling part of the production process. The plug 300 comprises a bar 305 which connects the plug members together and facilitates easy handling of the plug. The bar 305 is provided with two bar slots 330a, 330b (best seen in Figure 8c) which extend parallel to the length of the bar. These bar slots reduce the likelihood of distortion of the plug during the cooling part of the production process.

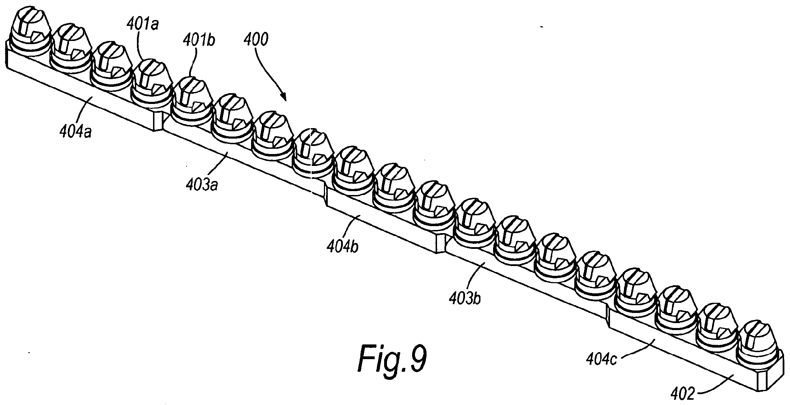

Figure 9 shows a perspective view of a further embodiment of a plug in accordance with the present invention. The plug (denoted generally by reference numeral 400) comprises a plurality of plug members, only two of which (401a, 401b) are labeled for convenience. The plug 400 comprises an elongate bar 402 comprising two waisted portions 403a, 403b. Wider bar portions 404a, 404b, 404c are provided immediately to each side of each waisted portion 403a, 403b. The waisted shape of the bar may assist in handling and/or assembly of an electrode, particularly if the handling and/or assembly is performed by machines.

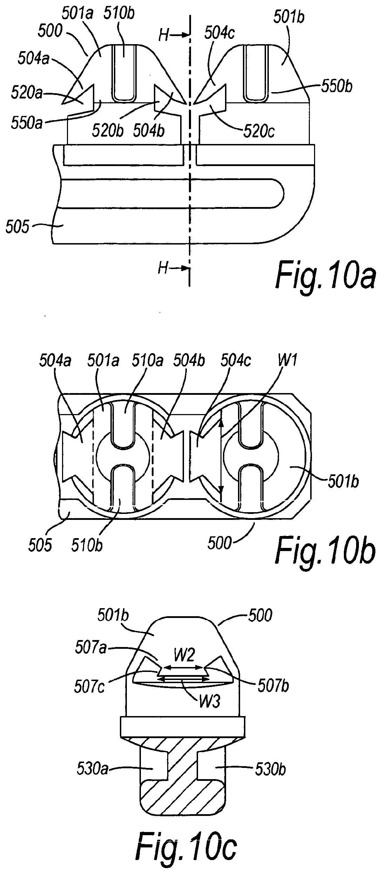

Figures 10a, 10b and 10c show part of a further embodiment of a plug in accordance with the present invention. Figure 10a is a side-on view of the end part of the plug. Figure 10b is a plan view of the end part of the plug and Figure 10c is a cross-sectional view through the plug along line HH (see Figures 10a and 10b). The plug is shown generally by reference numeral 500. Only two of the plug members (501a, 501b) are labeled for convenience and clarity. Spaces 520a, 520b, 520c are provided between respective projections 504a, 504b, 504c and their respective body portions 550a, 550b of the plug members. As can be readily seen from Figure 10a, the end plug member 501b is provided with only one projection 504c. This projection 504c projects inwardly.

As can be seen from Figure 10b, the projections are waisted. The projection 504c comprises a first portion 507a associated with the body portion 550b of plug member 501b, a third portion 507c at the end of the projection 504c and a second portion 507b between the first and third portions. The width w2 of the second portion 507b is less than the width w1 of the first portion 507a and the width w3 of the third portion 507c.

Two body portion slots (only two of which (510a, 510b) are labeled) are provided in the body portion of each plug member. These body portion slots 510a, 510b are provided to reduce the likelihood of the plug distorting during the cooling part of the production process. The plug 500 comprises a bar 505 which connects the plug members together and facilitates easy handling of the plug. The bar 505 is provided with two bar slots 530a, 530b (best seen in Figure 10c) which extend parallel to the length of the bar. These bar slots reduce the likelihood of distortion of the plug during the cooling part of the production process.

It should be noted that the width w2 of the second portion 507b could be greater than the width of the first portion w1, therefore providing a projection which is not waisted, but is wedge shaped, with a greater width at the end of the projection than at the part of the projection associated with the body portion.

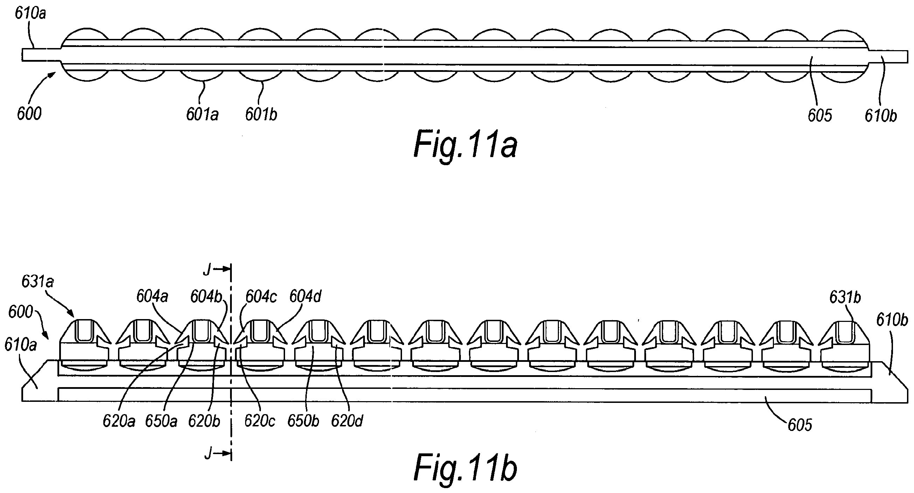

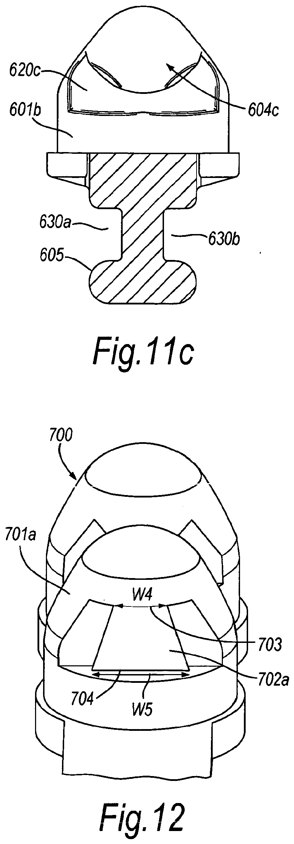

Figures 11a, 11b and 11c show a further embodiment of a plug in accordance with the present invention. Figure 11a is a bottom plan view of the plug. Figure 11b is a side-on view of the plug and Figure 11c is a cross-sectional view through the plug along line JJ (see Figure 11b). The plug is shown generally by reference numeral 600. Only two of the plug members (601a, 601b) are labeled for convenience and clarity. Spaces 620a, 620b, 620c, 620d are provided between respective projections 604a, 604b, 604c, 604d and their respective body portions 650a, 650b of the plug members. As can be seen from Figure 11c, the projections have arcuate ends. Two body portion slots (only two of which (610a, 610b) are labeled) are provided in the body portion of each plug member for the reason previously mentioned.

The plug 600 comprises a bar 605 which connects the plug members together and facilitates easy handling of the plug. The bar 605 is provided with two bar slots 630a, 630b (best seen in Figure 11c) which extend parallel to the length of the bar. The bar 605 is provided with two end portions 610a, 610b. These two end portions are not provided with plug members and assist in handling the plug during assembly of an electrode. The end portions also facilitate the secure packing of multiple electrodes in casings, particularly if the electrode comprises a small number of plugs.

It is noted that the end plug members (631a, 631b) are provided with only one projection each.

Figure 12 shows a further embodiment of part of a plug in accordance with the present invention. The plug is shown generally by reference numeral 700. Only one plug member 701a is labeled. Plug member 701a is provided with two projections, only one of which 702a is shown. The projection 702a is wedge shaped. The width w4 of a first region 703 of the projection associated with the plug member is less than the width w5 of a second region 704 at the end of the projection.

Those skilled in the art will realize that the teaching above may be applied to batteries other than lead-acid batteries.

## Claims

1. An electrode (10) for a battery, the electrode comprising:
(a) an electrode portion comprising:
(i) a sleeve (12a, b, c) and
(ii) active material (13a, b, c) disposed within the region bounded by the sleeve; and
(b) a plug (100; 300; 400; 500; 600; 700) comprising a plug member (101a, b; 201; 301a, b; 401a, b; 501a, b; 601a, b) disposed within the region bounded by the sleeve, the plug member being provided with one or more projections (104a, b, c; 204a, b; 304a, b, c; 504a, b, c; 604a, b, c, d; 702a) which engage with the sleeve to inhibit removal of the plug from the sleeve, wherein the plug forms a seal with the sleeve so to inhibit egress of active material from the electrode portion
wherein the plug comprises first and second plug members (101a, b; 201; 301a, b; 401a, b; 501a, b; 601a, b) adjacent to one another, the first plug member comprising a deformable projection (104a, b, c; 204a, b; 304a, b, c; 504a, b, c; 604a, b, c, d; 702a) which is adjacent to a deformable projection (104a, b, c; 204a, b; 304a, b, c; 504a, b, c; 604a, b, c, d; 702a) provided on the second plug member, the adjacent deformable projections being deformable so that attempted withdrawal of the plug members from the respective sleeves causes deformation of the adjacent deformable projections so that the adjacent deformable projections interfere with one another.

2. An electrode according to claim 1 wherein the electrode portion further comprises a conductive spine disposed within the region bounded by the sleeve.

3. An electrode according to claim 1 or claim 2 wherein the electrode comprises a plurality of electrode portions, each electrode portion comprising:
(i) a sleeve and
(ii) active material disposed within the region bounded by the sleeve.

4. An electrode according to claim 3, the plug comprising a plurality of plug members, each plug member being provided with one or more projections which engage with the sleeve to inhibit removal of the plug from the sleeve, the plug forming a seal with the sleeve so to inhibit egress of active material from each of the electrode portions.

5. An electrode according to claim 4, wherein one or both of the outermost plug members are provided with only one projection.

6. An electrode according to any preceding claim, wherein the one or more projections is a barb.

7. An electrode according to claim 6, wherein each projection presents a gently sloping surface to the sleeve when the plug member is being inserted into the sleeve and, when the plug member is being removed, the surface of the projection presented to the sleeve in the direction of removal of the plug member may be a steep surface of the projection.

8. An electrode according to any preceding claim, wherein a space (106a, b, c; 320a, b, c; 520a, b, c; 620a, b, c) is provided between the one or more projections and a body portion (105a, b; 350a, b; 550a, b; 650a, b) of the plug member.

9. An electrode according to any preceding claim, wherein one or more projections is waisted.

10. An electrode according to any preceding claim, wherein the sleeve has a cylindrical shape.

11. An electrode according to claim 10, wherein the cross-sectional shape of the sleeve is square, circular, oval, elliptical or rectangular.

12. A battery electrode plug for sealing engagement with a cylindrical sleeve of an electrode portion of an electrode according to any of claims 1 to 9, the plug (100; 300; 400; 500; 600; 700) comprising a plug base (5, 305, 505, 605) for assisting in handling the plug, a plug member (101a, b; 201; 301a, b; 401a, b; 501a, b; 601a, b) for insertion into the sleeve, the plug member being provided with one or more projections (104a, b, c; 204a, b; 304a, b, c; 504a, b, c; 604a, b, c, d; 702a) for engagement with the sleeve so as to inhibit removal of the plug from the sleeve, wherein the plug is capable of forming a seal with the sleeve, wherein the plug comprises first and second plug members (101a, b; 201; 301a, b; 401a, b; 501a, b; 601a, b) adjacent to one another, the first plug member comprising a deformable projection (104a, b, c; 204a, b; 304a, b, c; 504a, b, c; 604a, b, c, d; 702a) which is adjacent to a deformable projection (104a, b, c; 204a, b; 304a, b, c; 504a, b, c; 604a, b, c, d; 702a) provided on the second plug member, the adjacent deformable projections being deformable so that, in use, attempted withdrawal of the plug members from the respective sleeves causes deformation of the adjacent deformable projections so that the adjacent deformable projections interfere with one another.

13. A battery electrode plug according to claim 12, each plug member having a body portion (105a, 105b, 350a, 350b, 550a, 550b, 650a, 650b) comprising a cylindrical portion (2a, 2b) and a tapered head portion (3a, 3b).

14. A battery electrode plug according to claim 13, wherein the cylindrical portion is square, circular, oval, elliptical or rectangular in cross-section.

15. A battery comprising an electrode according to any one of claims 1 to 11, and/or a battery electrode plug according to any of claims 12 to 14.

## Patentansprüche

1. Elektrode (10) für eine Batterie, wobei die Elektrode Folgendes umfasst:
(a) einen Elektrodenabschnitt, umfassend:
(i) eine Hülse (12a, b, c) und
(ii) aktives Material (13a, b, c), das innerhalb des durch die Hülse gebundenen Bereichs angeordnet ist; und
(b) einen Stecker (100; 300; 400; 500; 600; 700), umfassend ein Steckerelement (101a, b; 201; 301a, b; 401a, b; 501a, b; 601a, b), das innerhalb des durch die Hülse gebundenen Bereichs angeordnet ist, wobei das Steckerelement mit einem oder mehreren Vorsprüngen (104a, b, c; 204a, b; 304a, b, c; 504a, b, c; 604a, b, c, d; 702a) versehen ist, die mit der Hülse in Eingriff stehen, um das Entfernen des Steckers aus der Hülse zu verhindern, wobei der Stecker mit der Hülse eine Abdichtung ausbildet, um so einen Austritt von aktivem Material aus dem Elektrodenabschnitt zu verhindern,
wobei der Stecker erste und zweite Steckerelemente (101a, b; 201; 301a, b; 401a, b; 501a, b; 601a, b) umfasst, die zueinander benachbart sind, wobei das erste Steckerelement einen verformbaren Vorsprung (104a, b, c; 204a, b; 304a, b, c; 504a, b, c; 604a, b, c, d; 702a) umfasst, der zu einem verformbaren Vorsprung (104a, b, c; 204a, b; 304a, b, c; 504a, b, c; 604a, b, c, d; 702a) benachbart ist, der auf dem zweiten Steckerelement vorgesehen ist, wobei die benachbarten verformbaren Vorsprünge derart verformbar sind, dass versuchtes Herausziehen der Steckerelemente aus den jeweiligen Hülsen ein Verformen der benachbarten verformbaren Vorsprünge bewirkt, sodass die benachbarten verformbaren Vorsprünge sich gegenseitig stören.

2. Elektrode nach Anspruch 1, wobei der Elektrodenabschnitt ferner eine Leiterplatte umfasst, die innerhalb des durch die Hülse gebundenen Bereichs angeordnet ist.

3. Elektrode nach Anspruch 1 oder Anspruch 2, wobei die Elektrode eine Mehrzahl von Elektrodenabschnitten umfasst, wobei jeder Elektrodenabschnitt Folgendes umfasst:
(i) eine Hülse und
(ii) aktives Material, das innerhalb des durch die Hülse gebundenen Bereichs angeordnet ist.

4. Elektrode nach Anspruch 3, wobei der Stecker eine Mehrzahl von Steckerelementen umfasst, wobei jedes Steckerelement mit einem oder mehreren Vorsprüngen versehen ist, die mit der Hülse in Eingriff stehen, um das Entfernen des Steckers aus der Hülse zu verhindern, wobei der Stecker mit der Hülse eine Abdichtung ausbildet, um so einen Austritt von aktivem Material aus jedem der Elektrodenabschnitten zu verhindern.

5. Elektrode nach Anspruch 4, wobei eines oder beide der äußersten Steckerelemente mit nur einem Vorsprung versehen sind.

6. Elektrode nach einem vorangehenden Anspruch, wobei der eine oder die mehreren Vorsprünge ein Widerhaken ist.

7. Elektrode nach Anspruch 6, wobei jeder Vorsprung der Hülse eine leicht geneigte Oberfläche präsentiert, wenn das Steckerelement in die Hülse eingeführt wird und, wenn das Steckerelement entfernt wird, die Oberfläche des Vorsprungs, die der Hülse in Richtung der Entfernung des Steckerelementes präsentiert wird, eine steile Oberfläche des Vorsprungs sein kann.

8. Elektrode nach einem vorangehenden Anspruch, wobei ein Raum (106a, b, c; 320a, b, c; 520a, b, c; 620a, b, c) zwischen dem einen oder den mehreren Vorsprüngen und einem Körperabschnitt (105a, b; 350a, b; 550a, b; 650a, b) des Steckerelementes vorgesehen ist.

9. Elektrode nach einem vorangehenden Anspruch, wobei ein oder mehrere Vorsprünge tailliert ist/sind.

10. Elektrode nach einem vorangehenden Anspruch, wobei die Hülse eine zylindrische Form aufweist.

11. Elektrode nach Anspruch 10, wobei die Hülse im Querschnitt quadratisch, kreisförmig, oval, elliptisch oder rechteckig ist.

12. Stecker einer Batterieelektrode zum abdichtenden Eingriff mit einer zylindrischen Hülse eines Elektrodenabschnitts einer Elektrode nach einem der Ansprüche 1 bis 9, der Stecker (100; 300; 400; 500; 600; 700) umfassend einen Steckersockel (5, 305, 505, 605) zum Unterstützen der Handhabung des Steckers, ein Steckerelement (101a, b; 201; 301a, b; 401a, b; 501a, b; 601a, b) zum Einführen in die Hülse, wobei der Steckersockel mit einem oder mehreren Vorsprüngen (104a, b, c; 204a, b; 304a, b, c; 504a, b, c; 604a, b, c, d; 702a) versehen ist zum Eingriff mit der Hülse, sodass das Entfernen des Steckers aus der Hülse verhindert wird, wobei der Stecker imstande ist, mit der Hülse eine Abdichtung auszubilden, wobei der Stecker erste und zweite Steckerelemente (101a, b; 201; 301a, b; 401a, b; 501a, b; 601a, b) umfasst, die zueinander benachbart sind, wobei das erste Steckerelement einen verformbaren Vorsprung (104a, b, c; 204a, b; 304a, b, c; 504a, b, c; 604a, b, c, d; 702a) umfasst, der zu einem verformbaren Vorsprung (104a, b, c; 204a, b; 304a, b, c; 504a, b, c; 604a, b, c, d; 702a) benachbart ist, der auf dem zweiten Steckelement vorgesehen ist, wobei die benachbarten verformbaren Vorsprünge derart verformbar sind, dass, im Betrieb, versuchtes Herausziehen der Steckerelemente aus den jeweiligen Hülsen ein Verformen der benachbarten verformbaren Vorsprünge bewirkt, sodass die benachbarten verformbaren Vorsprünge sich gegenseitig stören.

13. Stecker einer Batterieelektrode nach Anspruch 12, wobei jedes Steckerelement einen Körperabschnitt (105a, 105b, 350a, 350b, 550a, 550b, 650a, 650b) aufweist, der einen zylindrischen Abschnitt (2a, 2b) und einen verjüngten Kopfabschnitt (3a, 3b) umfasst.

14. Stecker einer Batterieelektrode nach Anspruch 13, wobei der zylindrische Abschnitt im Querschnitt rechteckig, kreisförmig, oval, elliptisch oder rechteckig ist.

15. Batterie, umfassend eine Elektrode nach einem der Ansprüche 1 bis 11, und/oder einen Stecker einer Batterieelektrode nach einem der Ansprüche 12 bis 14.

## Revendications

1. Électrode (10) destinée à une batterie, l'électrode comprenant :
(a) une partie d'électrode comprenant :
(i) une gaine (12a, b, c) et
(ii) un matériau actif (13a, b, c) disposé dans la zone délimitée par la gaine ; et
(b) un embout (100 ; 300 ; 400 ; 500 ; 600 ; 700) comprenant un élément d'embout (101a, b ; 201 ; 301a, b ; 401a, b ; 501a, b ; 601a, b) disposé dans la zone délimitée par la gaine, l'élément d'embout étant muni d'une ou plusieurs saillies (104a, b, c ; 204a, b ; 304a, b, c ; 504a, b, c ; 604a, b, c, d ; 702a) qui s'engagent avec la gaine afin d'empêcher le retrait de l'embout de la gaine, dans laquelle l'embout forme un joint avec la gaine de façon à empêcher la pénétration de matériau actif depuis la partie d'électrode,
dans laquelle l'embout comprend un premier et un second éléments d'embout (101a, b ; 201 ; 301a, b ; 401a, b ; 501a, b ; 601a, b) adjacents les uns aux autres, le premier élément d'embout comprenant une saillie déformable (104a, b, c ; 204a, b ; 304a, b, c ; 504a, b, c ; 604a, b, c, d ; 702a) qui est adjacente à une saille déformable (104a, b, c ; 204a, b, c ; 304a, b, c ; 504a, b, c ; 604a, b, c, d ; 702a) prévue sur le second élément d'embout, les saillies déformables adjacentes étant déformables de sorte que toute tentative de retrait des éléments d'embout des gaines respectives provoque une déformation des saillies déformables adjacentes de sorte que les saillies déformables adjacentes se gênent.

2. Électrode selon la revendication 1, dans laquelle la partie d'électrode comprend en outre une structure conductrice disposée dans la zone délimitée par la gaine.

3. Électrode selon la revendication 1 ou 2, dans laquelle l'électrode comprend une pluralité de parties d'électrode, chaque partie d'électrode comprenant :
(i) une gaine et
(ii) un matériau actif disposé dans la zone délimitée par la gaine.

4. Électrode selon la revendication 3, l'embout comprenant une pluralité d'éléments d'embout, chaque élément d'embout étant muni d'une ou plusieurs saillies qui s'engagent avec la gaine afin d'empêcher le retrait de l'embout de la gaine, l'embout formant un joint avec la gaine afin d'empêcher toute pénétration de matériau actif depuis chacune des parties d'électrode.

5. Électrode selon la revendication 4, dans laquelle un ou deux des éléments d'embout les plus externes sont munis d'une seule saillie.

6. Électrode selon l'une quelconque des revendications précédentes, dans laquelle la ou les saillies est/sont une pointe.

7. Électrode selon la revendication 6, dans laquelle chaque saillie présente une surface légèrement inclinée par rapport à la gaine lorsque l'élément d'embout est inséré dans la gaine et, lorsque l'élément d'embout est retiré, la surface de la saillie présentée à la gaine dans la direction de retrait de l'élément d'embout peut être une surface pentue de la saillie.

8. Électrode selon l'une quelconque des revendications précédentes, dans laquelle un espace (106a, b, c ; 320a, b, c ; 520a, b, c ; 620a, b, c) est prévu entre la ou les saillies et une partie de corps (105a, b ; 250a, b ; 550a, b ; 650a, b) de l'élément d'embout.

9. Électrode selon l'une quelconque des revendications précédentes, dans laquelle une ou plusieurs saillies est/sont cintrée(s).

10. Électrode selon l'une quelconque des revendications précédentes, dans laquelle la gaine possède une forme cylindrique.

11. Électrode selon la revendication 10, dans laquelle la forme transversale de la gaine est carrée, circulaire, ovale, elliptique ou rectangulaire.

12. Embout d'électrode de batterie destiné à être engagé de manière étanche avec une gaine cylindrique d'une partie d'électrode d'une électrode selon l'une quelconque des revendications 1 à 9, l'embout (100 ; 300 ; 400 ; 500 ; 600 ; 700) comprenant une base d'embout (5, 305, 505, 605) destinée à faciliter la manipulation dans l'embout, un élément d'embout (101a, b ; 201 ; 301a, b ; 401a, b ; 501a, b ; 601a, b) destiné à être inséré dans la gaine, l'élément d'embout étant muni d'une ou plusieurs saillies (104a, b, c ; 204a, b ; 304a, b, c ; 504a, b, c ; 604a, b, c, d ; 702a) destinées à s'engager avec la gaine de façon à empêcher le retrait de l'embout de la gaine, dans lequel l'embout peut former un joint avec la gaine, dans lequel l'embout comprend un premier et un second éléments d'embout (101a, b ; 201 ; 301a, b ; 401a, b ; 501a, b ; 601a, b) adjacents les uns aux autres, le premier élément d'embout comprenant une saillie déformable (104a, b, c ; 204a, b ; 304a, b, c ; 504a, b, c ; 604a, b, c, d ; 702a) qui est adjacente à une saille déformable (104a, b, c ; 204a, b, c ; 304a, b, c ; 504a, b, c ; 604a, b, c, d ; 702a) prévue sur le second élément d'embout, les saillies déformables adjacentes étant déformables de sorte que, pendant l'utilisation, toute tentative de retrait des éléments d'embout des gaines respectives provoque une déformation des saillies déformables adjacentes de sorte que les saillies déformables adjacentes se gênent.

13. Embout d'électrode de batterie selon la revendication 12, chaque élément d'embout ayant une partie de corps (105a, 105b, 350a, 350b, 550a, 550b, 650a, 650b) comprenant une partie cylindrique (2a, 2b) et une partie de tête effilée (3a, 3b).

14. Embout d'électrode de batterie selon la revendication 13, dans lequel la partie cylindrique possède une section transversale carrée, circulaire, ovale, elliptique ou rectangulaire.

15. Batterie comprenant une électrode selon l'une quelconque des revendications 1 à 11, et/ou un embout d'électrode de batterie selon l'une quelconque des revendications 12 à 14.
